# DEMANDE DE BREVET EUROPEEN

(11) **EP 3 492 362 A1**
(43) Date de publication de la demande: **05.06.2019**
(21) Numéro de dépôt: 18209451.6
(22) Date de dépôt: 30.11.2018
(51) Int. Cl.: B62K 27/00, B62K 27/12

(54) **ATTELAGE DE REMORQUE POUR VÉHICULE DU TYPE SCOOTER**

(30) Priorité: 01.12.2017 FR 1761528
(71) Demandeur: Lux Ferro International BV, 1181 LE Amstelveen (NL)
(72) Inventeur: PIRON, Michaël, 91180 Saint-Germain-Lès-Arpajon (FR); TOUATI, Jordan, 75012 PARIS (FR)
(74) Mandataire: Novaimo

(57) **Abrégé**

La présente invention concerne une armature d'attelage (1) adaptée pour coopérer avec un véhicule du type scooter (100) comprenant des premiers moyens d'accrochage (110), caractérisé en ce que l'armature d'attelage (1) en forme ouverte comprend : une portion centrale (2) longitudinale comprenant un moyen d'attelage (3) ; deux portions secondaires (7, 7') longitudinales, de part et d'autre de la portion centrale (2), s'étendant chacune depuis la portion centrale (2) jusqu'à une première extrémité, lesdites portions secondaires (7, 7') étant comprises dans un plan sécant à l'axe définissant la direction du véhicule (A), lesdites deux premières extrémités comprenant chacune des premiers moyens de fixation destinés à coopérer avec les premiers moyens d'accrochage dudit véhicule (100) en au moins deux premiers points de fixation ; et au moins un second élément de maintien (8, 8') longitudinal, fixé d'une part à une des deux portions secondaires (7, 7') et d'autre part à une seconde extrémité comprenant des seconds moyens de fixation destinés à coopérer avec les premiers moyens d'accrochage dudit véhicule en un second point de fixation. La présente invention concerne également un véhicule (100) du type scooter comprenant une telle armature d'attelage.

## Description

### DOMAINE DE L'INVENTION

La présente invention concerne une armature d'attelage pour atteler une remorque à un véhicule du type scooter et un véhicule comprenant une telle armature d'attelage.

### ÉTAT DE LA TECHNIQUE

Il est connu de l'art antérieur des moyens d'attelage d'une remorque à un véhicule deux roues. Notamment, le brevet US 2,580,112 décrit un système de remorque fixé à des points d'attache situés entre la roue avant et la roue arrière d'un scooter.

Le premier inconvénient de cette solution est que la remorque est solidaire de l'attelage. Il est impossible de modifier l'attelage de manière à fixer une autre remorque. Ainsi, pour rouler sans la remorque, le dévissage des moyens d'accrochage est nécessaire. Cette opération nécessitant du temps et un outil spécifique, elle est handicapante pour l'utilisateur. Le second inconvénient est que l'accroche est située sur un plan horizontal très près du sol. Dans cette configuration, le centre de gravité de l'ensemble scooter / conducteur est déplacé vers le bas et une gêne se fait ressentir lors de la conduite, pouvant générer un risque d'accident.

On connait également le brevet US 4,702,340 décrivant une motocyclette comprenant un élément de châssis formant, derrière la roue arrière de la motocyclette, un attelage de remorque. Une remorque peut ainsi être supportée par cet élément de châssis. Cet élément de châssis est un élément allongé en forme de U accroché de part et d'autre à l'axe de rotation de la roue arrière.

Cependant, sur les scooters actuels, l'axe de rotation de la roue arrière est encombré par le pot d'échappement ou les autres éléments du moteur et est donc inaccessible pour monter un tel attelage.

Ainsi, il existe un besoin d'un nouveau dispositif permettant d'atteler une remorque à un véhicule du type scooter.

### RÉSUMÉ

La présente invention vise donc à fournir une armature d'attelage pour un véhicule du type scooter s'affranchissant des inconvénients de l'art antérieur.

Selon un premier aspect, la présente invention concerne une armature d'attelage adaptée pour coopérer avec un véhicule du type scooter comprenant des premiers moyens d'accrochage, caractérisé en ce que l'armature d'attelage en forme ouverte comprend : une portion centrale longitudinale comprenant un moyen d'attelage ; deux portions secondaires longitudinales, de part et d'autre de la portion centrale, s'étendant chacune depuis la portion centrale jusqu'à une première extrémité, lesdites portions secondaires étant comprises dans un plan sécant à l'axe définissant la direction du véhicule, lesdites deux premières extrémités comprenant chacune des premiers moyens de fixation destinés à coopérer avec les premiers moyens d'accrochage dudit véhicule en au moins deux premiers points de fixation ; et au moins un second élément de maintien longitudinal, fixé d'une part à une des deux portions secondaires et d'autre part à une seconde extrémité comprenant des seconds moyens de fixation destinés à coopérer avec les premiers moyens d'accrochage dudit véhicule en un second point de fixation.

Avantageusement, le second élément de maintien permet de solidifier l'armature et de réduire la déformation et les contraintes subies dues à la traction de la remorque. Ce second élément autorise ainsi la fixation des extrémités de l'armature au-dessus de la roue arrière.

Dans un mode de réalisation, les deux portions secondaires et la portion centrale ont une forme sensiblement en U, de C ou de V.

Dans un mode de réalisation, les deux portions secondaires sont sensiblement parallèles entre elles et sont chacune sensiblement perpendiculaire à la portion centrale.

Dans un mode de réalisation, le moyen d'attelage est une boule d'attelage.

Dans un mode de réalisation, la portion centrale, les deux portions secondaires et le au moins un second élément de maintien sont métalliques.

Dans un mode de réalisation, le au moins un second élément longitudinal et l'une des deux portions secondaires depuis laquelle s'étend le au moins un second élément longitudinal forment un angle supérieur ou égal à 10°.

Dans un mode de réalisation, le second moyen de fixation de la seconde extrémité est espacé de chaque premier moyen de fixation d'une distance supérieure ou égale à 5 cm.

Selon un second aspect, l'invention consiste en un véhicule du type scooter comprenant des premiers moyens d'accrochage comprenant chacun un premier point de fixation et dans lequel au moins un premier moyen d'accrochage comprend en outre un second point de fixation ; lesdits premiers moyens d'accrochage étant chacun disposés sur un plan horizontal au-dessus de la roue arrière; ledit véhicule comprenant en outre une armature d'attelage selon le premier aspect de la présente invention, les premiers moyens de fixation étant fixés aux premiers points de fixation du véhicule et le au moins un second moyen de fixation étant fixé à au moins un second point de fixation du véhicule.

Dans un mode de réalisation, les premiers moyens d'accrochage sont localisés sur les flancs du véhicule.

Dans un mode de réalisation, les moyens de fixation des poignées latérales destinées à un passager arrière sont les premiers moyens d'accrochage destinés à fixer l'armature d'attelage.

### DÉFINITIONS

Dans la présente invention, les termes ci-dessous sont définis de la manière suivante :
- « **Véhicule du type scooter** » concerne tous les véhicules motorisés à deux roues ainsi que les véhicules scooter dits « trois roues » comprenant deux roues directrices avant et seulement une roue arrière de type Piaggio MP3.
- « **Longitudinal** » : concerne un élément dont la longueur est sensiblement supérieure aux deux autres dimensions. Dans un mode de réalisation, la longueur d'un élément longitudinal est au moins 10 fois supérieure à la largeur ou le diamètre de l'élément longitudinal.
- « **Sensiblement** » suivi du terme « perpendiculaire » ou « parallèle » ou suivi d'une valeur angulaire numérique doit être comprise comme « à plus ou moins 10° » ou « à plus ou moins 5 »

### BRÈVE DESCRIPTION DES FIGURES

**Figure 1** est un schéma montrant un véhicule du type scooter équipé d'une armature d'attelage selon un mode de réalisation de la présente invention.
**Figure 2** est un schéma montrant une armature d'attelage selon un mode de réalisation de la présente invention.
**Figure 3** est un schéma montrant des premiers moyens d'accrochage du véhicule.
**Figures 4A** et **4B** sont des dessins représentant un véhicule du type scooter comprenant les premiers moyens d'accrochage. Dans un souci de compréhension, l'armature d'attelage n'est pas représentée sur ces dessins.

### RÉFÉRENCES

- 1 -: Armature d'attelage
- 2 -: Portion centrale
- 3 -: Moyen d'attelage
- 4 -: Premier élément
- 5, 5' -: Premières extrémités
- 6, 6' -: Premiers moyens de fixation
- 7, 7' -: Portions secondaires
- 8 ,8' -: Seconds éléments de maintien
- 9, 9' -: Secondes extrémités
- 10, 10' -: Seconds moyens de fixation
- 11, 11' -: Point d'ancrage
- 100 -: Véhicule du type scooter
- 110, 110' -: Premiers moyens d'accrochage
- 111, 111' -: Premiers points de fixation
- 112, 112' -: Seconds points de fixation
- 101 -: Roue arrière du véhicule
- A -: Axe de la direction du véhicule

### DESCRIPTION DÉTAILLÉE

La description suivante sera mieux comprise à la lecture des dessins. Dans le but d'illustrer, l'armature d'attelage et le véhicule sont représentés dans des modes de réalisation préférés. Il doit être compris, cependant, que la présente demande n'est pas limitée aux arrangements, structures, caractéristiques, modes de réalisation et apparence précis indiqués. Les dessins ne sont pas dessinés à l'échelle et ne sont pas destinés à limiter la portée des revendications aux modes de réalisation représentés dans ces dessins. Par conséquent, il doit être compris que lorsque des caractéristiques mentionnées dans les revendications sont suivies par des références, lesdites références sont inclues uniquement en vue d'améliorer la compréhension des revendications et ne limitent en aucun cas la portée de ces revendications.

Selon un premier aspect, la présente invention concerne une armature d'attelage 1 destinée à être montée sur un véhicule du type scooter 100 pour atteler une remorque. Cette armature 1 permet l'accrochage à un véhicule du type scooter 100 de manière réversible, sans être dépendant de l'emplacement et de la taille des éléments moteur, et en déplaçant de manière très limitée le point de gravité de l'ensemble véhicule / conducteur.

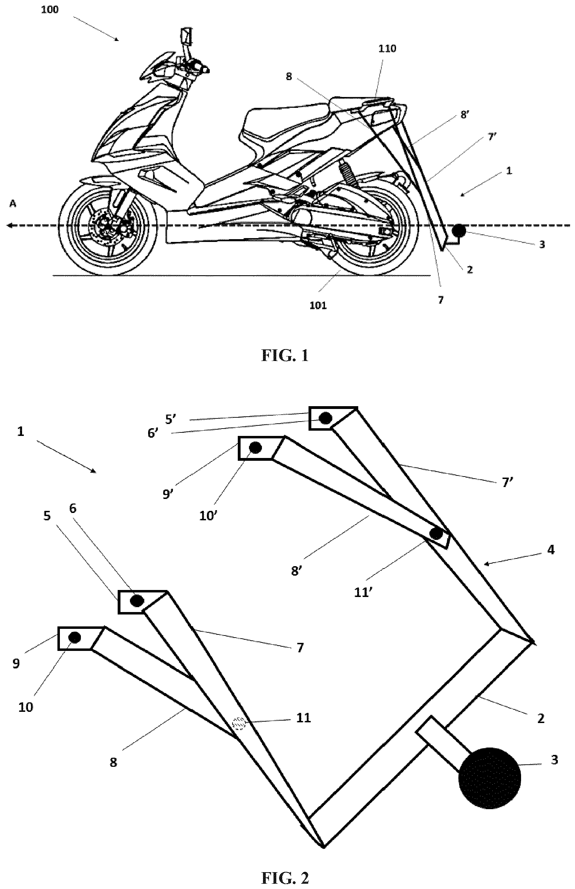

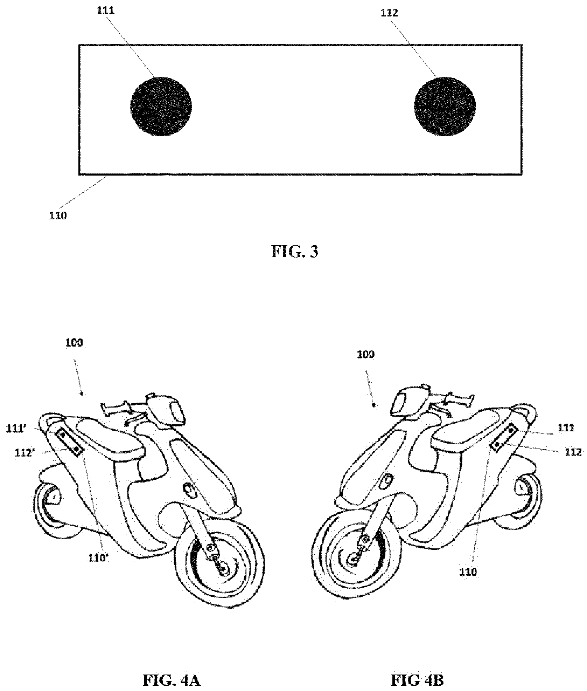

Comme illustré Fig. 1, l'armature d'attelage 1 est destinée à coopérer avec un véhicule du type scooter 100. Dans un mode de réalisation, l'armature 1 est fixée audit véhicule 100 par des moyens d'accrochage 110 et 110' (visualisables Fig. 4A et Fig. 4B).

Dans un mode de réalisation, ces premiers moyens d'accrochage 110 ,110' sont situés sur un plan horizontal au-dessus de la au moins une roue arrière 101 du véhicule 100.

Dans un mode de réalisation, l'armature d'attelage 1 est illustrée Fig. 1.

L'armature d'attelage 1 comprend un premier élément allongé 4. Dans un mode de réalisation, le premier élément allongé 4 s'étend longitudinalement.

Dans la présente description, le premier élément désigne l'élément géométrique ayant une forme ouverte et comportant la partie centrale 2, les deux parties secondaires 7, 7'. Dans la suite de la description, on parlera du premier élément pour désigner l'ensemble des pièces formé de la portion centrale et des portions secondaires et on parlera de l'armature d'attelage pour désigner le premier élément muni notamment des seconds éléments de maintien.

Dans un mode de réalisation, le premier élément allongé 4 est en forme ouverte. Par forme ouverte, on entend une forme dont les deux extrémités longitudinales sont libres ou dont les deux extrémités longitudinales ne sont pas confondues.

Dans un mode de réalisation, on entend par forme ouverte une forme de U, une forme en C et/ou une forme en V.

Dans un mode de réalisation, le premier élément 4 est agencé pour coopérer avec un véhicule du type scooter 100 comprenant des premiers moyens d'accrochage 110, 110'. Dans un mode de réalisation, le premier élément 4 est agencé pour coopérer avec un véhicule du type scooter 100 comprenant des premiers moyens d'accrochage 110, 110'.

Dans un mode de réalisation, le premier élément 4 est un tube ou un élément cylindrique. Le premier élément 4 peut également présenter une section rectangulaire. Dans un mode de réalisation, la portion centrale 2 et les portions secondaires 7, 7' sont solidaires. Dans un mode de réalisation, la portion centrale 2 et les portions secondaires comprennent une barre longitudinale allant de la première portion secondaire 7 à la seconde portion secondaire 7' en passant par la portion centrale 2. Dans un mode de réalisation, cette barre longitudinale présente au moins deux angles de part et d'autre de la portion centrale 2. Dans un mode de réalisation, ces deux angles sont compris entre 45 et 135°, préférentiellement entre 80° et 100°.

Comme illustré Fig. 2, le premier élément 4 comprend une portion centrale 2. Dans un mode de réalisation, cette portion centrale 2 destinée à être localisée à l'arrière du véhicule 100 quand l'armature 1 est fixée sur un véhicule 100. Le premier élément 4 comprend également des premières extrémités 5, 5' et deux portions secondaires 7,7' de part et d'autre de la portion centrale 2. Dans un mode de réalisation, les deux portions secondaires 7,7' chacune s'étendant depuis la portion centrale 2 jusqu'à une extrémité 5, 5'.

Dans un mode de réalisation, la portion centrale 2 comprend un moyen d'attelage 3. Dans un mode de réalisation, l'armature 1 comprend un moyen d'attelage localisé sur la portion centrale 2.

Ce moyen d'attelage 3 est agencé de manière à atteler une remorque à un véhicule du type scooter 100. Dans un mode de réalisation, ce moyen d'attelage 3 est un dispositif conçu pour y attacher une remorque.

Dans un mode de réalisation, l'axe longitudinal d'au moins une partie de la portion centrale 2 est sensiblement perpendiculaire à l'axe A définissant la direction du véhicule.

Dans un mode de réalisation, le moyen d'attelage 3 est une boule d'attelage. Cette boule d'attelage peut communément être appelé un crochet d'attelage ou un attache remorque.

Les portions secondaires 7 ,7' permettent d'effectuer la liaison entre les premiers moyens de fixation 6, 6' et la portion centrale 2. Dans un mode de réalisation, au moins une partie de chaque portion secondaire 7, 7' est sensiblement parallèle à au moins une partie de l'autre portion secondaire7,7'. Dans un mode de réalisation, au moins une partie de chaque portion secondaire est sensiblement perpendiculaire à au moins une partie de la portion centrale 2. L'avantage est d'obtenir un premier élément 4 en forme de U ou en forme de C dans lequel les deux extrémités peuvent être fixées à deux points de fixation de part et d'autre du véhicule du type scooter 100 solidaires d'une portion centrale 2 disposée à l'arrière dudit véhicule 100.

Ici, les directions doivent être comprises comme les directions selon les axes longitudinaux des portions citées.

Dans un mode de réalisation illustré Fig. 1, les portions secondaires 7, 7' sont comprises dans un plan sécant à l'axe A définissant la direction du véhicule 100. Dans un mode de réalisation, ledit plan est sécant à l'axe A formant un angle au moins supérieur à 45° ou 60°.

Dans un mode de réalisation où ledit véhicule 100 est un deux roues, l'axe A définissant la direction du véhicule 100 passe par la roue avant et la roue arrière 101. Dans un mode de réalisation, l'axe A définissant la direction du véhicule 100 est l'axe longitudinal du véhicule 100.

L'angle entre le plan comprenant les portions secondaires 7, 7' et l'axe définissant la direction du véhicule 100 permet avantageusement de disposer le ou les points d'accrochage entre le véhicule 100 et l'armature d'attelage 1 horizontalement au-dessus de la roue arrière. En effet, à partir d'une certaine valeur, l'armature 1 permet un accrochage sans que les portions secondaires 7, 7' soient gênées par l'encombrement autour de la roue arrière 101 où se situent généralement la plupart des éléments moteurs. En accrochant l'armature 1 sur un niveau horizontal similaire au niveau du moyen d'attelage 3, le démontage serait difficile ou bien les moyens d'accrochage devait contourner les éléments moteurs en augmentant la largeur du véhicule 100. La présente invention présente avantageusement une structure simple et facile à monter et à démonter.

De plus, un accrochage en hauteur permet d'éviter un décalage trop important du centre de gravité d'un ensemble véhicule / conducteur. Enfin,

Dans un mode de réalisation, les extrémités 5, 5' de chaque portion secondaire comprennent chacune des premiers moyens de fixation 6, 6' destinés à coopérer avec les premiers moyens d'accrochage 110, 110' dudit véhicule 100.

Dans un mode de réalisation, les premiers moyens de fixation 6, 6' comprennent un alésage ou un alésage comprenant un pas de vis. Dans un mode de réalisation, les premiers moyens de fixation 6, 6' sont destinés à coopérer avec un système vis/écrou des premiers moyens d'accrochage 110, 110' du véhicule 100.

Dans un mode de réalisation, l'armature d'attelage 1 comprend également un second élément de maintien 8, 8' ou deux seconds éléments de maintien 8, 8'.

Dans un mode de réalisation, le au moins un second élément de maintien 8, 8' est un élément allongé ou longitudinal.

Dans un mode de réalisation, le au moins un second élément de maintien 8, 8' est fixé au premier élément 4. Dans un mode de réalisation préférentiel, le au moins un second élément de maintien 8, 8' est fixé à une portion secondaire du premier élément 4.

Dans un mode de réalisation, le au moins un second élément de maintien comprend une seconde extrémité 9, 9'. Dans un mode de réalisation, cette seconde extrémité 9, 9' forme un angle avec le corps longitudinal du au moins un second élément de maintien 8, 8'.

Dans un mode de réalisation, cette seconde extrémité 9, 9' comprend des seconds moyens de fixation 10, 10' destinés à coopérer avec les premiers moyens d'accrochage 110, 110' du véhicule 100.

Dans un mode de réalisation, les seconds moyens de fixation 10, 10' comprennent un alésage ou un alésage comprenant un pas de vis. Dans un mode de réalisation, les seconds moyens de fixation 10, 10' sont destinés à coopérer avec un système vis/écrou des premiers moyens d'accrochage 110, 110' du véhicule 100.

Avantageusement, le au moins un second élément de maintien permet de solidifier l'armature d'attelage 1. En effet, lors de la traction d'une remorque, due à l'angle formé entre les potions secondaires et l'axe A, la force de traction de la remorque génère un moment mécanique important au point situé sur les deux premiers moyens de fixation 6, 6' ainsi que le long des deux portions secondaires 7, 7' et la portion centrale. Ce moment va générer une déformation et des contraintes importantes le long des deux portions secondaires 7, 7'.

Ainsi, le au moins un second moyen de maintien génère un point d'ancrage 11, 11' de l'armature 1 solidifiant la structure, réduisant la déformation et les contraintes subies dues à la traction de la remorque.

Dans un mode de réalisation, les deux seconds éléments comprennent chacune une portion de maintien et les deux portions de maintien sont contenus dans un plan sensiblement sécant à l'axe A. Dans un mode de réalisation, l'angle formé par ledit plan et l'axe A est inférieur à l'angle formé par le plan contenant les deux portions secondaires 7, 7' et l'axe A.

Dans un mode de réalisation, l'angle formé au point d'ancrage 11, 11' par le second élément de maintien et la portion secondaire est sensiblement supérieur ou égale à 10°.

Dans un mode de réalisation, l'angle formé au point d'ancrage 11, 11' par le second élément de maintien et la portion secondaire est compris entre 8° et 25°, préférentiellement entre 10° et 20°.

Dans un mode de réalisation, le point d'ancrage 11, 11' est une liaison totale, c'est-à-dire sans degré de liberté entre le second élément de maintien 8, 8' et le premier élément 4.

Dans un mode de réalisation, une des deux portions secondaires 7, 7' et le second élément de maintien 8, 8' comprennent chacun un alésage au niveau du point d'ancrage 11, 11'. Dans un mode de réalisation, le second élément de maintien 8, 8'comprend également un système vis / écrou dont la tige filetée passe par les alésages de la portion secondaire 7, 7' et du second élément de maintien 8, 8'.

Selon un second aspect, la présente invention concerne un véhicule du type scooter 100 comprenant l'armature d'attelage 1 selon le premier aspect de la présente invention.

Dans un mode de réalisation, le véhicule du type scooter 100 est un scooter.

Dans un mode de réalisation, ledit véhicule 100 comprend deux roues directrices avant et une roue arrière 101. Dans un mode de réalisation, les deux roues directrices avant sont articulées par un parallélogramme de manière à permettre l'inclinaison dudit véhicule 100 dans les virages. Dans un mode de réalisation, le véhicule du type scooter 100 est un scooter communément appelé « scooter à trois roues » du type Piaggio MP3.

Dans un mode de réalisation, l'armature d'attelage 1 est destinée à être fixée à un véhicule du type scooter 100. Dans un mode de réalisation, les premiers moyens de fixation 6, 6' du premier élément 4 et les seconds moyens de fixation 10, 10' du au moins un second élément de maintien 8, 8' sont destinés à coopérer avec des premiers moyens de fixation 6, 6' dudit véhicule 100.

Dans un mode de réalisation, les premiers moyens d'accrochage 110, 110' dudit véhicule 100 comprennent chacun au moins un premier point de fixation 111, 111' destiné à coopérer avec les premiers moyens de fixation 6, 6' du premier élément 4.

Dans un mode de réalisation, les premiers moyens d'accrochage 110, 110' dudit véhicule 100 comprennent au moins un second point de fixation 112, 112' destiné à coopérer avec les seconds moyens de fixation 10, 10' du second élément de maintien 8, 8'.

Dans un mode de réalisation illustré Fig. 3, les premiers moyens d'accrochage 110, 110' comprennent au moins un premier point de fixation 111, 111' et au moins un second point de fixation 112, 112'. Dans un mode réalisation, le premier 111, 111' et / ou le second point de fixation 112, 112' est une tige filetée destinée à coopérer avec un alésage de l'armature 1.

Dans un mode de réalisation, la distance entre le premier point de fixation 111, 111' et le second point de fixation 112, 112' du même premier moyen d'accrochage est comprise entre 5 et 50 cm, préférentiellement entre 5 et 15 cm. Dans un mode de réalisation, la distance entre le premier point de fixation 111, 111' et le second point de fixation 112, 112' du même premier moyen d'accrochage est supérieure ou égale à 5 cm ou compris entre 5 cm et 10 cm.

Cette distance permet de générer avantageusement un angle entre le second élément de maintien 8, 8' et la seconde portion secondaire.

Dans un mode de réalisation illustré Fig. 4A et Fig. 4B, les premiers et seconds points de fixation sont situés sur un plan horizontal au-dessus de la roue arrière 101 du véhicule 100.

Par « sur un plan horizontal au-dessus de la roue arrière », on entend ici sur un plan horizontal, c'est-à-dire un plan parallèle au sol, plus éloigné du sol que tout plan horizontal comprenant un point de la roue arrière 101. On entend ici que ledit véhicule est positionné en position de fonctionnement.

Dans un mode de réalisation, les premiers moyens d'accrochage 110, 110' correspondent aux moyens d'accrochage communément compris sur des véhicules du type scooter permettant de fixer les poignées pour passagers.

Dans un mode de réalisation, les premiers et seconds moyens de fixation 10, 10' comprennent, en outre des pattes de fixation destinées à monter une poignée, notamment une poignée pour le passager dudit véhicule 100.

Dans un mode de réalisation, les premiers moyens d'accrochage 110, 110' dudit véhicule 100 sont agencés sur les flancs latéraux dudit véhicule 100.

Dans un mode de réalisation, les premiers moyens de fixation 6, 6' de l'armature 1 sont fixés au premier point de fixation 111, 111' du véhicule du type scooter 100. Dans un mode de réalisation, le au moins un second moyen de fixation de l'armature 1 est fixé au au moins un second point de fixation 112, 112' du véhicule du type scooter 100. Dans un mode de réalisation, les fixations entre l'armature 1 et ledit véhicule 100 sont réalisées par le moyen d'un système vis / écrou.

Bien que divers modes de réalisation aient été décrits et illustrés, la description détaillée ne doit pas être considérée comme étant limitée aux à ces derniers. Diverses modifications peuvent être apportées aux modes de réalisation par l'homme du métier sans s'écarter du véritable esprit et de la portée de la divulgation telle que définie par les revendications.

## Revendications

1. Armature d'attelage (1) adaptée pour coopérer avec un véhicule du type scooter (100) comprenant des premiers moyens d'accrochage (110, 110'), **caractérisé en ce que** l'armature d'attelage (1) en forme ouverte comprend :
- une portion centrale (2) longitudinale comprenant un moyen d'attelage (3) ;
- deux portions secondaires (7, 7') longitudinales, de part et d'autre de la portion centrale (2), s'étendant chacune depuis la portion centrale (2) jusqu'à une première extrémité (5, 5'), lesdites portions secondaires (7, 7') étant comprises dans un plan sécant à l'axe définissant la direction du véhicule (A), lesdites deux premières extrémités (5, 5') comprenant chacune des premiers moyens de fixation (6,6') destinés à coopérer avec les premiers moyens d'accrochage dudit véhicule (100) en au moins deux premiers points de fixation (111, 111') ; et
- au moins un second élément de maintien (8, 8') longitudinal, fixé d'une part à une des deux portions secondaires (7, 7') et d'autre part à une seconde extrémité (9, 9') comprenant des seconds moyens de fixation (10, 10') destinés à coopérer avec les premiers moyens d'accrochage (110, 110') dudit véhicule en un second point de fixation (112, 112').

2. Armature d'attelage (1) selon la revendication **1**, dans lequel les deux portions secondaires (7, 7') et la portion centrale (2) ont une forme sensiblement en U, de C ou de V.

3. Armature d'attelage (1) selon la revendication **1** ou la revendication **2**, dans lequel les deux portions secondaires (7,7') sont sensiblement parallèles entre elles et sont chacune sensiblement perpendiculaire à la portion centrale (2).

4. Armature d'attelage (1) selon l'une des revendications **1** à **3**, dans lequel le moyen d'attelage (3) est une boule d'attelage.

5. Armature d'attelage (1) selon l'une des revendications **1** à **4**, dans lequel la portion centrale (2), les deux portions secondaires (7, 7') et le au moins un second élément de maintien (8, 8') sont métalliques.

6. Armature d'attelage (1) selon l'une des revendications **1** à **5**, dans lequel le au moins un second élément longitudinal (8, 8') et l'une des deux portions secondaires (7,7') depuis laquelle s'étend le au moins un second élément longitudinal (8, 8') forment un angle supérieur ou égal à 10°.

7. Armature d'attelage (1) selon l'une des revendications **1** à **6**, dans lequel le second moyen de fixation (10 ; 10') de la seconde extrémité (9, 9') est espacé de chaque premier moyen de fixation (6, 6') d'une distance supérieure ou égale à 5 cm.

8. Véhicule du type scooter (100) comprenant des premiers moyens d'accrochage (110, 110') comprenant chacun un premier point de fixation (111, 111') et dans lequel au moins un premier moyen d'accrochage (110, 110') comprend en outre un second point de fixation (112, 112') ; lesdits premiers moyens d'accrochage (110, 110') étant chacun disposés sur un plan horizontal au-dessus de la roue arrière (101) ; ledit véhicule comprenant en outre une armature d'attelage (1) selon l'une quelconque des revendications **1** à **7**, les premiers moyens de fixation (6, 6') étant fixés aux premiers points de fixation (111, 111') du véhicule (100) et le au moins un second moyen de fixation (10, 10') étant fixé à au moins un second point de fixation (112) du véhicule (100).

9. Véhicule (100) selon la revendication **8** dans lequel les premiers moyens d'accrochage (110, 110') sont localisés sur les flancs du véhicule (100).

10. Véhicule de type scooter (100) la revendication **8** ou la revendication **9**, **caractérisé en ce que** les moyens de fixation des poignées latérales destinées à un passager arrière sont les premiers moyens d'accrochage (110, 110') destinés à fixer l'armature d'attelage (1).
